Europäisches Patentamt

**European Patent Office**

Office européen des brevets

(11) Publication number: **0 207 527**
**A2**

# (12) EUROPEAN PATENT APPLICATION

(21) Application number: **86109133.8**

(22) Date of filing: **04.07.86**

(51) Int. Cl.⁴: **G 06 K 11/06**
**G 06 F 3/033**

(30) Priority: **05.07.85 JP 146563/85**

(43) Date of publication of application:
**07.01.87 Bulletin 87/2**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Tanabe, Masanori**
**17-2-203, Moriyamacho-3-chome**
**Hitachi-shi(JP)**

(72) Inventor: **Kawakami, Kanji**
**2876-71, Senbacho**
**Mito-shi(JP)**

(72) Inventor: **Sato, Ichiya**
**17-16, Ishinazakacho-1-chome**
**Hitachi-shi(JP)**

(72) Inventor: **Yoneyama, Takao**
**212-139, Koya**
**Katsuta-shi(JP)**

(72) Inventor: **Okada, Hisao**
**20-3, Ayukawacho-6-chome**
**Hitachi-shi(JP)**

(72) Inventor: **Inose, Shigeru**
**Ohiraryo, 484-2 Tomita Ohiramachi**
**Shimotsuga-gun Tochigi-ken(JP)**

(72) Inventor: **Suto, Mareo**
**1464-4, Arai, Ohiramachi Shimotsuga-gun**
**Tochigi-ken(JP)**

(72) Inventor: **Uzuhashi, Hideo**
**389, Tomita Ohiramachi Shimotsuga-gun**
**Tochigi-ken(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Coordinate input method and apparatus using elastic wave.**

(57) Coordinate input method and apparatus are disclosed. The coordinate input apparatus comprises a transparent input tablet (1) which is laminated on a tablet-like display face (10) of the display unit and has a plurality of elastic wave detectors (2a to 2d) mounted thereon. When any position (P) on the input tablet is pressed with an elastic wave input pen (3); an elastic wave emitted from the input pen and propagated through the tablet is detected by the detectors to measure propagation times ($T_1$ to $T_4$) of the elastic wave to the respective detectors. A coordinate computation circuit (8) determines coordinates of the any press position of the input pen on the basis of the measured propagation times and supplies the coordinate information to the display unit for display thereon. Prior to the determination of coordinates of the any press position, two reference point ($P_0$, $Q_0$) on the tablet are pressed with the input pen to compute data of deviation of a coordinate system of the display face with respect to a coordinate system of the tablet. The coordinates of the any press position of the input pen are determined in a form in which the deviation between the display face and tablet coordinate systems is compensated by means of the computed deviation data.

Croydon Printing Company Ltd.

./...

# FIG. 1

COORDINATE INPUT METHOD AND

APPARATUS USING ELASTIC WAVE

BACKGROUND OF THE INVENTION

The present invention relates to a tablet type coordinate input method and an apparatus having a transparent coordinate determining tablet laminated on a display face of a display unit, and in particular to such a method and an apparatus in which the coordinates representing the position of an input member for drawing characters, figures or the like on the tablet are determined by using the propagation time of an elastic wave.

In such an apparatus disclosed in JP-A-55-32121, a tablet of acrylic plate, glass plate or the like is laminated on a liquid crystal display unit, and longitudinal vibration is utilized. In an apparatus disclosed in JP-A-56-101278, a tablet of acrylic plate is laminated on a liquid crystal display unit, and the plate wave (Lamb wave) is utilized. In an apparatus disclosed in JP-A-58-14247, a tablet of glass, plastics or the like is laminated on an electric field luminescent display unit, and the vibration wave is utilized. The coordinate input apparatus of tablet type and the display unit originally fulfil their functions respectively individually and have individual coordinate systems. If both the coordinate systems are overlapped each other while leaving the correspondence between them improper, therefore, the position on the tablet indicated by an input member or input pen is deviated from the position displayed on the display unit. As a result, the apparatus which originally aims at enhancing convenience might become hard to use. This means that in order to realize an integrated coordinate input apparatus having a transparent coordinate determining tablet laminated on the display face, it is required to properly associate the coordinate system of the display section with that of the coordinate determining section and to square reference points of both the sections with each other as far as possible. A mere mechanical alignment works cannot satisfy this requirement since it is difficult to compensate various dimension errors caused during a process of fabrication of the apparatus. For realizing a coordinate input apparatus which has a high precision and is easy to use, the apparatus must be constructed so that the dimension errors as well as the alignment error may be compensated. However, this point has not been considered at all in such apparatuses of the prior art.

SUMMARY OF THE INVENTION

An object of the present invention is to provide a tablet type coordinate input method and an apparatus having a transparent tablet laminated on a display face, in which errors between the coordinate systems of the tablet and the display face including dimension errors and an alignment error can be compensated.

In the present invention, a plurality of elastic wave detectors are mounted on predetermined positions of the transparent tablet. According to one aspect of the invention, at least two reference points are established on the surface of the tablet and pressed (or touched) by means of an elastic wave input member to form a coordinate system having as its reference axis a straight line passing through the above-described reference point or a straight line parallel to the above-described straight line, and information for determining the press position of the input member is pressed is taken out with respect to the above-described coordinate system. According to another aspect of the invention, data of deviation of the display face coordinate system with respect to the tablet coordinate system (defined depending upon the positions whereat the elastic wave detectors are mounted on the tablet) are computed on the basis of the output signals of the detectors produced in response to the pressing of at least two reference points on the tablet by the elastic wave input member. When any given or arbitrary point on the tablet is pressed by the elastic wave input member, the coordinates of the pressed point are determined in a form compensated by using the computed deviation data. The computation of the deviation data for correction may be sufficient if it is carried out once when the apparatus begins to be used.

In a preferred embodiment, the coordinates are determined by using the propagation time of the longitudinal elastic wave among elastic waves propagated through the tablet. Accordingly, the coordinate can be determined with higher precision. Since the longitudinal elastic wave propagates inside the tablet, the longitudinal elastic wave is not influenced at all even if the tablet is touched by a hand. In other words, a natural or usual handwriting input operation with a hand placed on the tablet is possible.

BRIEF DESCRIPTION OF THE DRAWINGS

Fig. 1 is a block diagram for illustrating an embodiment of a tablet type coordinate input apparatus according to the present invention;

Fig. 2 shows elastic waves propagated inside the tablet;

Figs. 3 and 4 show a typical coordinate determining method;

Fig. 5 shows a relationship between the coordinate system of the tablet and the dot representation of a dot matrix liquid crystal display unit;

Figs. 6 to 8 are view useful in explaining the principle of coordinate system compensation according to the present invention;

Figs. 9a and 9b are flow charts for illustrating a coordinate determining procedure according to an embodiment of the present invention;

Fig. 10 shows a preferred concrete example of a time counter circuit and a coordinate computation circuit included in the apparatus of Fig. 1; and

Fig. 11 is a time chart of various signals shown in Figs. 1 and 10.


DESCRIPTION OF PREFERRED EMBODIMENTS

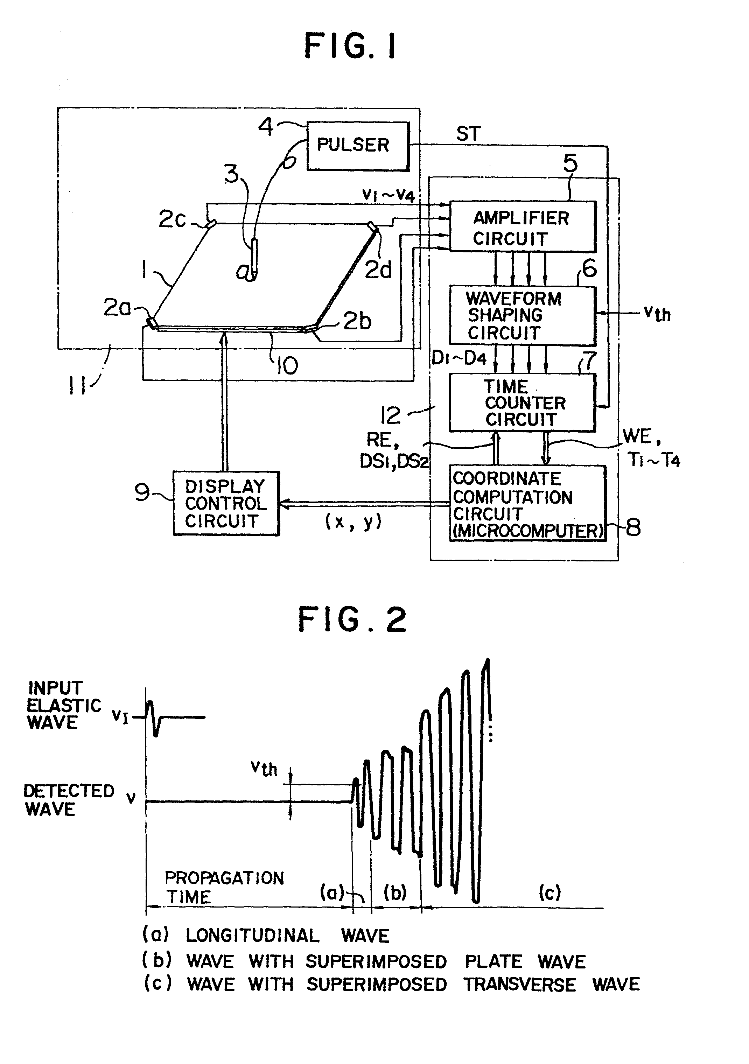

Fig. 1 shows a coordinate input apparatus according to an embodiment of the present invention. Numeral 1 denotes an input tablet made of a transparent material such as soda-line glass. All of four corners of the input tablet are cut off. Piezoelectric elements 2a to 2d as elastic wave detectors which may be made of lead zirconate-titanate, are stuck to side faces of the four corners by using organic agents such as epoxy resin. Numeral 3 denotes an elastic wave input member which is shown as a pen for drawing characters, figures or the like with a hand by bringing the front end of the pen into contact with the input tablet 1, i.e., by pressing the tip of the pen onto the input tablet 1. The loci of the characters, figures or the like are supplied to a computer, for example. The input pen 3 has therein piezoelectric elements made of lead zirconate-titanate similar to the piezoelectric elements 2a to 2c. In response to pulse voltage applied from a pulser 4, the piezoelectric devices vibrate and produce elastic waves. By bringing the tip of the input pen 3 into contact with the input tablet 1, the elastic waves are propagated inside the input tablet 1 and arrive at the piezoelectric elements 2a to 2d after propagation times thereof depending upon the position whereat the tip of the input pen 3 comes in contact with the tablet. The piezoelectric elements 2a to 2d convert the received elastic waves into electric signals.

Concurrently with application of the pulse voltage for driving piezoelectric elements to the input pen 3, the pulser 4 transfers a count start signal ST to a time counter circuit 7 which in turn begins to count internal basic clocks.

On the other hand, analog signals $v_1$ to $v_4$ corresponding to the elastic waves detected by the piezoelectric elements 2a to 2d are individually amplified by an amplifier circuit 5 and converted into digital signals by a waveform shaping circuit 6. The resultant digital signals $D_1$ to $D_4$ are transferred to the time counter circuit 7 which in turn stop counting the basic clocks. Thus, the propagation time values of the elastic waves corresponding to the distances from the input pen 3 to the piezoelectric elements 2a to 2d are counted.

The amplifier circuit 5 may be a conventional high frequency amplifier circuit. The waveform shaping circuit 6 may comprise a conventional comparator IC which compares the level of an analog signal supplied to one input thereof with a fixed threshold $v_{th}$ supplied to another input to convert the analog signal into a digital signal.

The propagation time values $T_1$ to $T_4$ counted

by the counter circuit 7 are transferred to a coordinate computation circuit 8 which can be constituted by a microcomputer. The coordinate computation circuit 8 computes the (x, y) coordinates of the input pen 3.

In the illustrated embodiment, the tablet type coordinate input apparatus having the above-described configuration and principle is integrated with a liquid crystal display unit. The tablet type coordinate input apparatus is composed of an input manipulation section 11 and a signal control section 12. The input manipulation section 11 includes the input tablet 1, piezoelectric elements 2a to 2d, input pen 3 and pulser 4. The signal control section 12 includes the amplifier circuit 5, waveform shaping circuit 6, time counter circuit 7 and coordinate computation circuit 8. That is to say, the input manipulation section 11 directly relates to transmission and reception of the elastic waves while the signal control section 12 electrically processes the propagation time of the elastic waves. On the other hand, the liquid crystal display unit is composed of a display control circuit 9 and a display section 10. An (x, y) coordinate signal sent out from the coordinate computation circuit 8 is transferred to the display control circuit 9 which drives the liquid crystal display section disposed just under the transparent input tablet 1. It is thus possible to input handwritten characters and/or figures by means of the input pen 3 while successively confirming the input by means of the display located just under the pen.

Since the performance of tablet type coordinate input apparatus using elastic waves is substantially determined by accuracy in counting the propagation time of the elastic wave, selection of the elastic wave mode utilized, highly efficient and accurate detection of the elastic wave, and higher precision of the counter circuit are demanded. In an embodiment of the present invention, therefore, the longitudinal elastic wave among elastic waves propagated through the tablet as well as the leading portion of that longitudinal elastic wave are used to count the propagation time.

When the input pen 3 comes in contact with the input tablet 1, an elastic wave $v_I$ is inputted as shown in Fig. 2. Inside the input tablet 1, an elastic wave having a mixture of longitudinal and transverse wave components and a plate wave (Lamb wave) causing deformation of the entire plate are propagated in a complicated entangled form. However, these waves are different in propagation velocity. The plate wave arrives at the detector somewhat later than the longitudinal elastic wave, and the transverse wave arrives further later. Along the surface of the input tablet 1 as well, a surface acoustic wave is propagated at a propagation velocity close to that of the transverse wave and mixed with the above-described waves. The propagation velocity of the transverse wave and the surface acoustic wave is approximately half that of the longitudinal wave.

Under such a situation, the longitudinal elastic wave is used in this embodiment as the elastic wave which arrives at the detector first and is a pure wave having no other wave modes mixed therewith. In a portion of wave with superimposed plate wave ((b) of Fig. 2), the phase is shifted as the distance between the input pen 3 and the piezoelectric elements 2a to 2d is increased. In a portion of wave with superimposed transverse wave ((c) of Fig. 2), the amplitude changes in a complicated manner. In a portion including only the longitudinal elastic wave ((a) of Fig. 2), the waveform is not disturbed excepting the change in amplitude when the distance between the input pen 3 and the piezoelectric elements 2a to 2d is changed. Since the longitudinal elastic wave has the highest propagation velocity, unnecessary waves causing position determining error do not appear at all between transmission and reception. By detecting such a longitudinal elastic wave efficiently and accurately, therefore, the coordinate can be determined with higher precision. Further, touching the tablet 1 with a hand exerts no influence upon the longitudinal elastic wave because the longitudinal elastic wave is propagated inside the input tablet 1. Therefore, a natural or usual handwriting input operation with a hand placed on the table becomes possible.

On the basis of respective propagation times until the longitudinal elastic wave arrives at the piezoelectric elements 2a to 2d, the coordinate computation circuit 8 executes the coordinate computation.

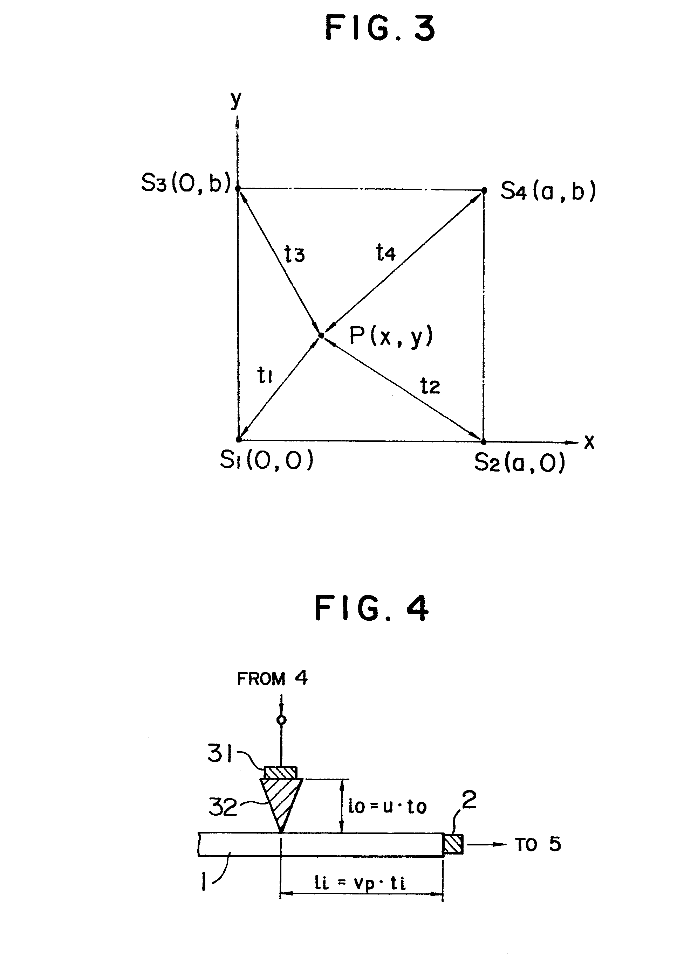

Referring to Fig. 3, points $S_1$ to $S_4$ correspond to the positions of the piezoelectric elements 2a to 2d shown in Fig. 1, and a point P (x, y) represents the position coordinates of the input pen 3 to be determined. Letters $t_1$ to $t_4$ represent the values of propagation times required for the elastic wave originating from the input pen to arrive at the piezoelectric elements 2a to 2d. Assuming that $\overline{S_1 S_2} = \overline{S_3 S_4} = a$ and $\overline{S_1 S_3} = \overline{S_2 S_4} = b$ in Fig. 3 and that the propagation velocity of the elastic wave is $v_p$, propagation distances $\ell_1$ to $\ell_4$ between the point P and points $S_1$ to $S_4$ can be represented as

$$\ell_1 = v_p\, t_1, \quad \ell_2 = v_p\, t_2, \quad \ell_3 = v_p\, t_3, \quad \ell_4 = v_p\, t_4$$

$$\ldots\ldots (1)$$

By using $\ell_1$ to $\ell_4$ thus obtained, the point P (x, y) can be derived as

$$
\begin{cases}
x_1 = \dfrac{a}{2} + \dfrac{1}{2a}(\ell_1 + \ell_2)(\ell_1 - \ell_2) & \ldots\ldots (2) \\[3mm]
y_1 = \dfrac{b}{2} + \dfrac{1}{2b}(\ell_1 + \ell_3)(\ell_1 - \ell_3) & \ldots\ldots (3)
\end{cases}
$$

or

$$\begin{cases} x_2 = \dfrac{a}{2} + \dfrac{1}{2a} \, (\ell_3 + \ell_4)(\ell_3 - \ell_4) \qquad \ldots\ldots \text{(4)} \\[3em] y_2 = \dfrac{b}{2} + \dfrac{1}{2b} \, (\ell_2 + \ell_4)(\ell_2 - \ell_4) \qquad \ldots\ldots \text{(5)} \end{cases}$$

As shown in Fig. 4, the input pen 3 comprises a piezoelectric element 31 attached to the bottom face of a conic pen tip portion 32 made of, for example, aluminum. The piezoelectric elements causes a mechanical vibration in response to the pulse voltage applied thereto by the pulser 4. In order to accurately measure the propagation distance $\ell_i$ of the elastic wave from the point whereat the pen tip is pressed onto the input tablet 1 to an elastic wave detector 2 comprising a piezoelectric element attached to a corner of the input tablet 1, it is more preferable to take into consideration a distance $\ell_0$ from the tip of the pen tip portion 32 to its bottom face and execute coordinate computation as

$$\begin{cases} x_1 = \dfrac{a}{2} + \dfrac{v_p^{\,2}}{2a} \, (t_1 - t_2)\left\{(t_1 + t_2) - \dfrac{2\ell_0}{u}\right\} \\[1em] \qquad\qquad\qquad\qquad\qquad\qquad\qquad \ldots\ldots \text{(6)} \\[2em] y_1 = \dfrac{b}{2} + \dfrac{v_p^{\,2}}{2b} \, (t_1 - t_3)\left\{(t_1 + t_3) - \dfrac{2\ell_0}{u}\right\} \\[1em] \qquad\qquad\qquad\qquad\qquad\qquad\qquad \ldots\ldots \text{(7)} \end{cases}$$

or

$$\left\{ \begin{array}{l} x_2 = \dfrac{a}{2} + \dfrac{v_p{}^2}{2a} (t_3 - t_4) \{ (t_3 + t_4) - \dfrac{2\ell_0}{u} \} \\ \\ \qquad\qquad\qquad\qquad\qquad\qquad\qquad\qquad \dots\dots (8) \\ \\ y_2 = \dfrac{b}{2} + \dfrac{v_p{}^2}{2b} (t_2 - t_4) \{ (t_2 + t_4) - \dfrac{2\ell_0}{u} \} \\ \\ \qquad\qquad\qquad\qquad\qquad\qquad\qquad\qquad \dots\dots (9) \end{array} \right.$$

where $\underline{u}$ represents the propagation velocity of the elastic wave within the tip portion 32 of the pen.

Each of the propagation times $t_1$ to $t_4$ is derived as the product of each of output values $T_1$ to $T_4$ of the time counter circuit 7 and the repetition period $\Delta t$ of the basic count clock pulses functioning within the time counter circuit 7, i.e.

$$t_1 = T_1 \cdot \Delta t \ (i = 1 \sim 4) \qquad\qquad \dots\dots (10)$$

By using equation (10), equation (6), for example, can be rewritten as

$$x_1 = \frac{a}{2} + \frac{v_p{}^2}{2a} (T_1 - T_2) \cdot \Delta t \{ (T_1 + T_2) \cdot \Delta t - \frac{2\ell_0}{u} \}$$

$$\dots\dots (6')$$

Euations (7) to (9) can also be rewritten in the same way. By these equations, the coordinate computation circuit 8 can effect coordinate computation by using the output data $T_1$ to $T_4$ of the time counter circuit 7 as input data as they are.

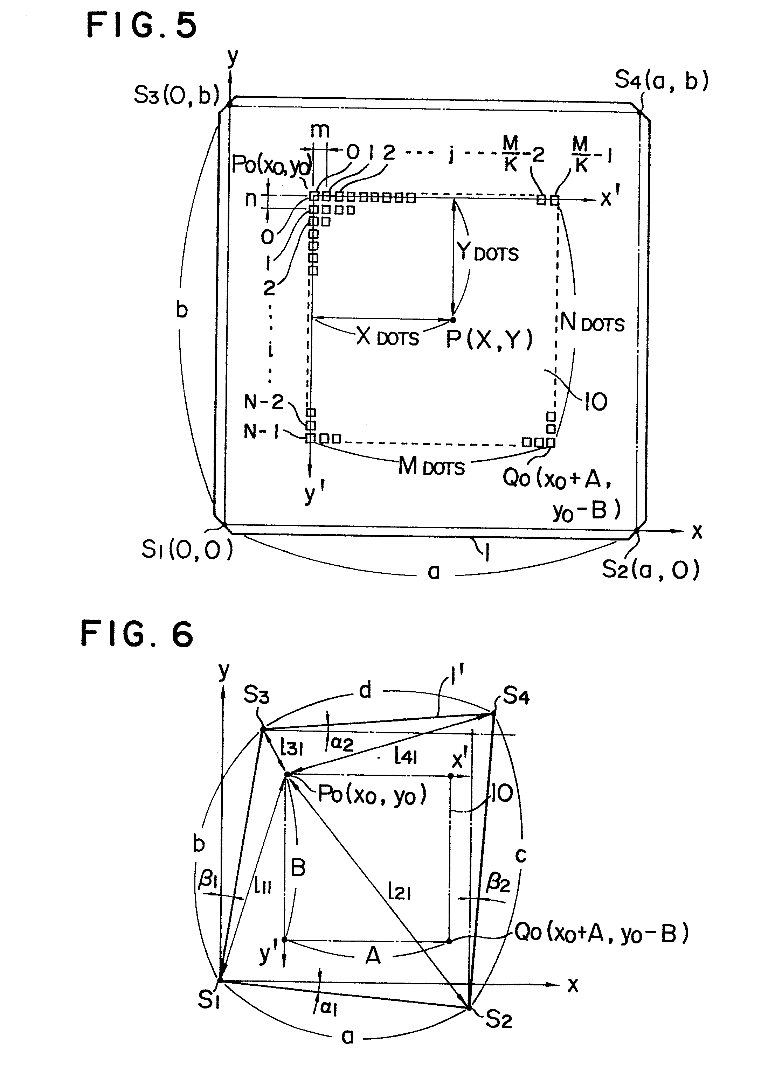

It is desirable that the coordinate value (x, y) sent out from the coordinate computation circuit 8 has an output data form matched to a display form of the display control circuit 9 and the liquid crystal display section 10. In the present embodiment, an M x N dot matrix as shown in Fig. 5 is used as the liquid crystal display section 10. It is now assumed that the entire lengths of column and row are A and B and the distances between display dots are $\underline{m}$ and $\underline{n}$. Points on the input tablet 1 corresponding to the top leftmost dot and bottom rightmost dot can be represented as $P_0$ $(x_0, y_0)$ and $Q_0$ $(x_0 + A, y_0 - B)$, respectively. In addition, the x - y coordinate system of the input tablet 1 is related to the x' - y' coordinate system of the display section 10 as follows:

$$\begin{cases} x' = x - x_0 & \dots\dots (11) \\ \\ y' = y - y_0 & \dots\dots (12) \end{cases}$$

In such configuration, the P (x, y) coordinates on the input tablet 1 is converted into the display dot P (X, Y) by means of the following equations:

$$\begin{cases} X = \dfrac{x'}{m} & \dots\dots (13) \\ \\ Y = \dfrac{y'}{n} & \dots\dots (14) \end{cases}$$

In order to display the display point P, the display dot data (X, Y) corresponding to the coordinates derived from equations (13) and (14) are transferred to memory devices contained in the display control circuit 9 after being converted into data storage form of the memory devices. By specifying the address order $A_I$ and the data bit order $D_R$ of the memory device in the present embodiment, the above-described data (X, Y) is converted into data (I, R) as

$$
\begin{cases}
I = \dfrac{M}{K} \cdot (N - 1 - Y) + [\dfrac{X}{K}]_{quotient} & \quad\ldots\ldots \ (15) \\[4mm]
R = [\dfrac{X}{K}]_{residue} & \quad\ldots\ldots \ (16)
\end{cases}
$$

where K is the number of unit bits of the memory device.

As a result of execution of the above-described computation, the position of the input pen 3 pressed onto the input tablet 1 is immediately displayed by dots on the display section 10 located just under the input tablet 1. However, such a method is only applicable to an ideal case where the coordinate system of the input tablet 1 is matched to that of the display section 10 under certain conditions. If various errors deviating from the coordinate matching conditions occur, the position where the pen is pressed cannot be correctly determined. In an embodiment of the present invention, the determination error in such a situation can be compensated only by pressing the input pen 3 onto two reference points having a known distance therebetween when the apparatus is first used. This compensation will now be described by referring to Figs. 6 to 8.

In Figs. 6, 7 and 8, it is assumed that the elastic wave detector sections $S_1$ to $S_4$ attached to four corners of the transparent input tablet 1' laminated on the liquid crystal display section 10 form a quadrilateral having angular deviations $\alpha_1$, $\beta_1$, $\alpha_2$ and $\beta_2$ with respect to the x' - y' coordinate system of the display section 10. It is also assumed that the length values of sides of the quadrilateral are known as $\overline{S_1 S_2} = a$, $\overline{S_1 S_3} = b$, $\overline{S_2 S_4} = c$, and $\overline{S_3 S_4} = d$. At this time, two points $P_0$ and $Q_0$ on the input tablet 1' respectively corresponding to the top leftmost dot and the bottom rightmost dot of the display section 10 are defined to be reference points. When this apparatus begins to be used, the reference points are pressed by the input pen 3. And, distances $\ell_{11}$ to $\ell_{41}$ and $\ell_{12}$ to $\ell_{42}$ from the reference points to detector sections $S_1$ to $S_4$ are derived by counting pulses for the propagation time of the elastic wave. By using the propagation distances $\ell_{11}$ to $\ell_{41}$ and $\ell_{12}$ to $\ell_{42}$, the angular deviations $\alpha_1$, $\beta_1$, $\alpha_2$ and $\beta_2$ are derived to compensate the coordinate system.

A method of determining the coordinates of the press position of the input pen 3 in a form compensated in the coordinate system alignment error will now be described in conjunction with an example in which the propagation times or distances from the input pen 3 to the detector sections $S_1$, $S_2$ and $S_3$ are used.

At first, the reference points $P_0$ and $Q_0$ are pressed by means of the input pen 3. The propagation distances $\ell_{11}$, $\ell_{21}$ and $\ell_{31}$ from the reference point $P_0$ to the detector sections $S_1$, $S_2$ and $S_3$ and the propagation distances $\ell_{12}$, $\ell_{22}$ and $\ell_{32}$ from the reference point $Q_0$ to the detector sections $S_1$, $S_2$ and $S_3$ are derived. By using these propagation distances, the following values are computed:

$$\left\{ \begin{array}{ll} x_{a1} = \dfrac{a}{2} + \dfrac{1}{2a}(\ell_{11} + \ell_{21})(\ell_{11} - \ell_{21}) & \ldots\ldots (17) \\[2em] y_{a1} = \sqrt{(\ell_{11} + x_{a1})(\ell_{11} - x_{a1})} & \ldots\ldots (18) \end{array} \right.$$

$$\left\{ \begin{array}{ll} x_{a2} = \dfrac{a}{2} + \dfrac{1}{2a}(\ell_{12} + \ell_{22})(\ell_{12} - \ell_{22}) & \ldots\ldots (19) \\[2em] y_{a2} = \sqrt{(\ell_{12} + x_{a2})(\ell_{12} - x_{a2})} & \ldots\ldots (20) \end{array} \right.$$

$$\left\{ \begin{array}{ll} y_{b1} = \dfrac{b}{2} + \dfrac{1}{2b}(\ell_{11} + \ell_{31})(\ell_{11} - \ell_{31}) & \ldots\ldots (21) \\[2em] x_{b1} = \sqrt{(\ell_{11} + y_{b1})(\ell_{11} - y_{b1})} & \ldots\ldots (22) \end{array} \right.$$

$$\begin{cases} Y_{b2} = \dfrac{b}{2} + \dfrac{1}{2b}\,(\ell_{12} + \ell_{32})\,(\ell_{12} - \ell_{32}) & \dots\dots (23) \\[3em] x_{b2} = (\ell_{12} + Y_{b2})\,(\ell_{12} - Y_{b2}) & \dots\dots (24) \end{cases}$$

The angular deviations $\alpha_1$ and $\beta_1$ can be related to those various values as follows:

$$\begin{cases} \cos\alpha_1 = \dfrac{-A\,(x_{a1} - x_{a2}) + B\,(y_{a1} - y_{a2})}{(x_{a1} - x_{a2})^2 + (y_{a1} - y_{a2})^2} & \dots\dots (25) \\[3em] \sin\alpha_1 = \dfrac{-A\,(y_{a1} - y_{a2}) - B\,(x_{a1} - x_{a2})}{(x_{a1} - x_{a2})^2 + (y_{a1} - y_{a2})^2} & \dots\dots (26) \end{cases}$$

$$\begin{cases} \cos\beta_1 = \dfrac{-A\,(x_{b1} - x_{b2}) + B\,(y_{b1} - y_{b2})}{(x_{b1} - x_{b2})^2 + (y_{b1} - y_{b2})^2} & \dots\dots (27) \\[3em] \sin\beta_1 = \dfrac{-A\,(y_{b1} - y_{b2}) - B\,(x_{b1} - x_{b2})}{(x_{b1} - x_{b2})^2 + (y_{b1} - y_{b2})^2} & \dots\dots (28) \end{cases}$$

The computation represented by equations (17) to (28) is executed only when the apparatus begins to be used, for example. Therefore, the input speed performance is not hampered at all when the apparatus is in use, although extraction of square roots is included in equations such as (18), (20).

0207527

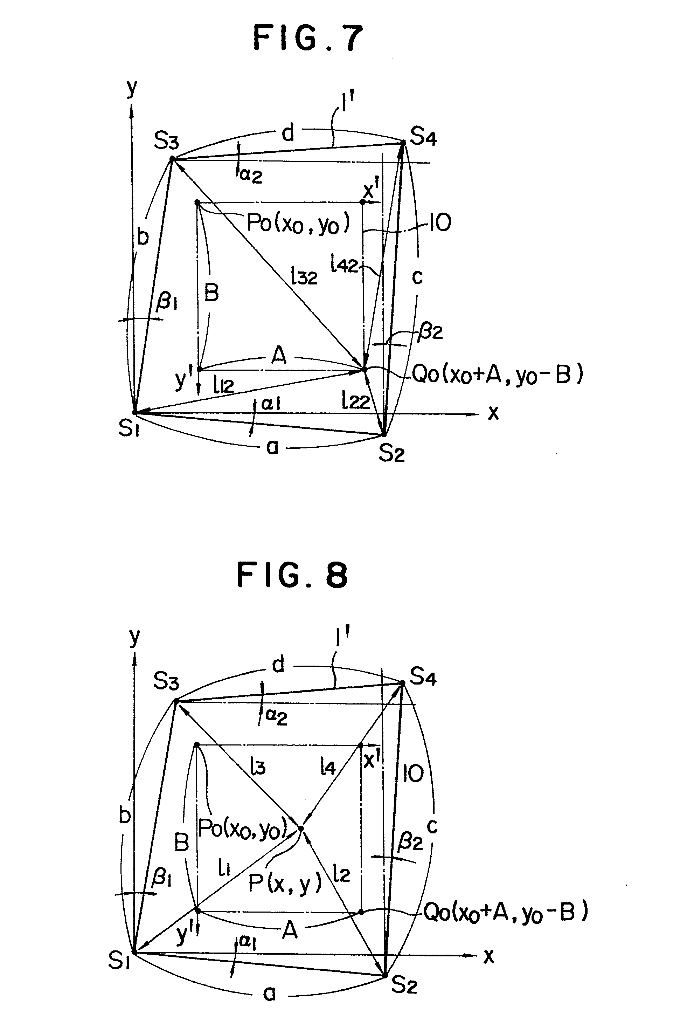

As shown in Fig. 8, an arbitrary position P on the input tablet 1' is then pressed with the input pen 3. Propagation distances $\ell_1$, $\ell_2$ and $\ell_3$ from the input pen to the detector sections $S_1$, $S_2$ and $S_3$ are derived, and these distance values are used to compute the following values $x_a$ and $y_b$:

$$\begin{cases} x_a = \dfrac{a}{2} + \dfrac{1}{2a} (\ell_1 + \ell_2)(\ell_1 - \ell_2) & \ldots\ldots (29) \\\\ y_b = \dfrac{b}{2} + \dfrac{1}{2b} (\ell_1 + \ell_3)(\ell_1 - \ell_3) & \ldots\ldots (30) \end{cases}$$

From these values of $x_a$ and $y_b$ and the angular deviations of equations (25) to (28), the position P (x, y) where the input pen is pressed is determined as follows:

$$\begin{cases} x = \dfrac{x_a \cdot \cos \beta_1 + y_b \cdot \sin \alpha_1}{\cos \alpha_1 \cos \beta_1 + \sin \alpha_1 \sin \beta_1} & \ldots\ldots (31) \\\\ y = \dfrac{y_b \cdot \cos \alpha_1 - x_a \cdot \sin \beta_1}{\cos \alpha_1 \cos \beta_1 + \sin \alpha_1 \sin \beta_1} & \ldots\ldots (32) \end{cases}$$

Since $\cos \alpha_1$, $\cos \beta_1$, $\sin \alpha_1$ and $\sin \beta_1$ appearing in equations (31) and (32) can be handled as constants already computed by using equations (25) to (28), the computation of equations (29) to (32) can be conducted by using only addition, substraction, multiplication and division. Accordingly, it can be understood that the input speed performance during the use of the apparatus is not hampered at all.

The determination of the coordinates of the pen press position in an alignment error compensated form when another combination of detector sections is used, can be made by a manner similar to the above-described method. For example, when the propagation times required for the wave to reach the detector sections $S_2$, $S_1$ and $S_4$ are used, angular deviations $\alpha_1$ and $\beta_2$ are computed. When the propagation times required for the wave to reach the detector sections $S_3$, $S_1$ and $S_4$ are used, $\beta_1$ and $\beta_2$ are computed. When the propagation times required for the wave to reach the detector sections $S_4$, $S_2$ and $S_3$ are used, $\alpha_2$ and $\beta_2$ can be computed. If a plurality of combinations of detectors are used, therefore, all of the angular deviations $\alpha_1$, $\beta_1$, $\alpha_2$ and $\beta_2$ can be computed or determined.

Even when the propagation distances to only two detector sections are used, the press position $P(x, y)$ of the input pen can be determined. For example, when only distances $\ell_1$ and $\ell_2$ to $S_1$ and $S_2$ are used, equation (30) among equations (29) and (30) is replaced by

$$Y_b = \sqrt{(\ell_1 + x_a)(\ell_1 - x_a)} \qquad \ldots \ldots (30')$$

In the examples heretofore described, distances a, b, c and d between elastic wave detector sections adjoining each other are known. In accordance with the present invention, however, it is not absolutely necessary for the distance between detector sections to be already known. Because these distances can be computed by using the propagation time, i.e., propagation distance between the input pen and the detector section taken in as input data from the counter circuit when two reference points are pressed by the input pen. Assuming that $\overline{P_0 Q_0} = C$ (where $C = \overline{A^2 + B^2}$ ..... (33)) in Figs. 6 to 8, for example, the distance $\underline{a}$ between the detector sections $S_1$ and $S_2$ can be computed as

$$a = \sqrt{(C - C_1 + C_3)^2 + (h_1 - h_2)^2} \qquad \ldots \ldots (34)$$

where

$$C_1 = \frac{C}{2} + \frac{1}{2C}(\ell_{11}^2 - \ell_{12}^2) \qquad \ldots \ldots (35)$$

$$C_3 = \frac{C}{2} + \frac{1}{2C}(\ell_{21}^2 - \ell_{22}^2) \qquad \ldots \ldots (36)$$

$$h_1 = \sqrt{\ell_{11}^2 - C_1^2} \qquad \ldots \ldots (37)$$

$$h_2 = \sqrt{\ell_{22}^2 - C_3^2} \qquad \ldots \ldots (38)$$

Other distances b, c and d between detector sections can also be computed by similar methods.

In all of the above-described embodiments, the detection section $S_1$ is chosen to be the origin of the x - y coordinate system. However, the essence of the present invention is not affected by the position of the origin.

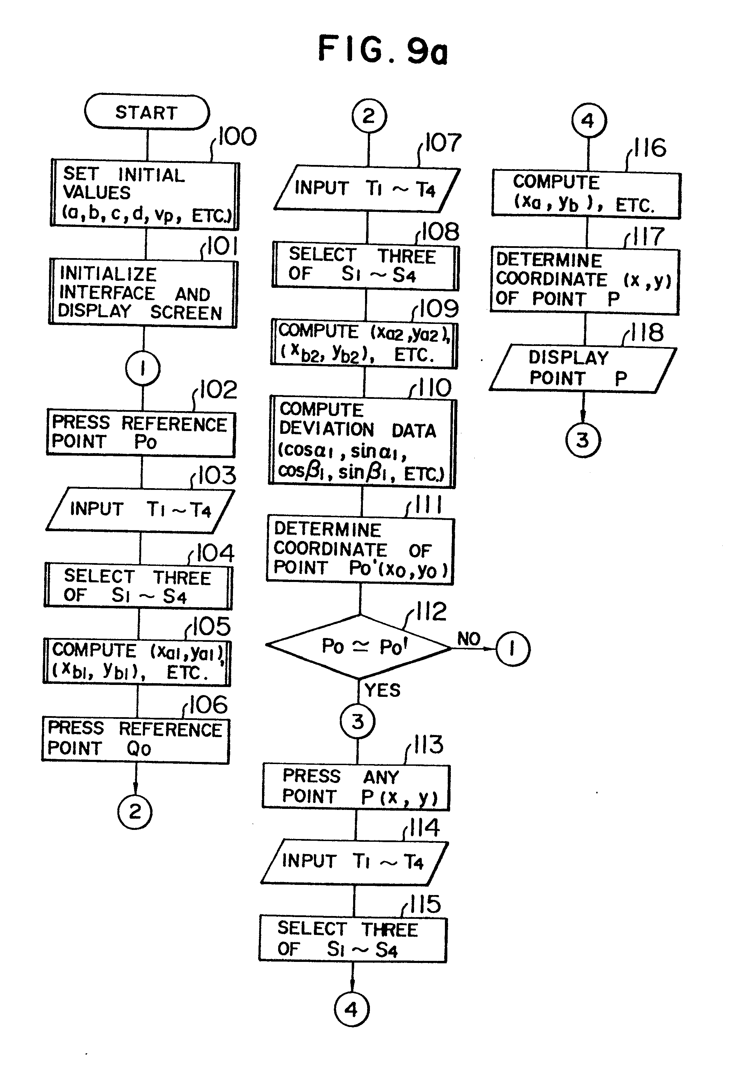

Fig. 9a is a flow chart illustrating the procedure for determining the coordinates in the above-described embodiment. The microcomputer 8 of Fig. 1 is driven on the basis of such a flow chart. The performance of the coordinate input apparatus integrated with the display face using elastic waves is thus raised.

At first in Fig. 9a, initial values of distances a, b, c and d between detector sections $S_1$ to $S_4$, the propagation velocity $v_p$ of the elastic wave, and so on are set (step 100). Further, the interface of the microcomputer 8 and the display screen of the liquid crystal display unit are initialized (step 101). Subsequently, the reference point $P_0$ on the tablet 1 corresponding to the top leftmost dot of the display section 10 is pressed with the input pen 3 (step 102). The propagation times $T_1$ to $T_4$ corresponding to the reference point are supplied from the counter circuit 7 to the coordinate computation circuit 8 (step 103). On the basis of equations (17), (18), (21) and (22), values $(x_{a1}, y_{a1})$ and $(x_{b1}, y_{b1})$ are computed in the coordinate computation circuit 8 (step 105). The other reference point $Q_0$ on the tablet 1 corresponding to the bottom rightmost dot of the display section 10 is pressed with the input pen 3 (step 106). After step 107 which is similar to step 103, values $(x_{a2}, y_{a2})$ and $(x_{b2}, y_{b2})$ are computed on the basis of equations (19), (20), (23) and (24) at step 109. By using values derived in steps 105 and 109, angle deviation data $\cos \alpha_1$, $\sin \alpha_1$, $\cos \beta_1$ and $\sin \beta_1$ are computed on the basis of equations (25) to (28) at step 110. These deviation data are stored into a memory within the microcomputer 8. In such a way, the coordinate initialization of this apparatus is completed.

Steps 111 and 112 are provided to check as occasion demands whether the coordinate initialization manipulation has been properly conducted. At step 111, the coordinates of the point $P_0$ pressed at step 102 are determined as point $P_0'$ $(x_0, y_0)$ by use of the deviation data computed at step 110. At step 112, it is checked whether the determined point $P_0'$ $(x_0, y_0)$ substantially coincides with the actually pressed point $P_0$ or not. For example, this check can be visually made in such a manner that at step 102 a point $P_0$ on the tablet corresponding to the top leftmost dot of the display section 10 is pressed by the input pen while displaying the top leftmost dot and thereafter the coordinate point $P_0'$ derived at step 111 is displayed. In case of anti-coincidence, there was a mistake in manipulation and steps 102 to 112 are repeated.

After the deviation data for compensating coordinate system have been derived as described above, an arbitrary point P on the tablet 1 can be pressed (step 113). The propagation time values $T_1$ to $T_4$ corresponding to the point P are supplied from the counter circuit 7 to the coordinate computation circuit 8 (step 114). In the coordinate computation circuit 8, values $(x_a, y_b)$ are computed on the basis of equations (29) and (30) (step 116). By using the values derived at step 116 and the deviation data derived at step 110 and stored in the memory, the coordinate computation circuit 8 determines the (x, y) coordinates of the pressed point P on the basis of equations (31) and (32) (step 117). It is preferable that, the coordinate computation circuit 8 outputs the coordinate values of the point P in the form matched to a display fashion of the liquid display section 10. At step 118, the pressed point P is displayed on the display section 10. Thereafter, steps 113 to 118 are repeated in accordance with the movement of the input pen 3.

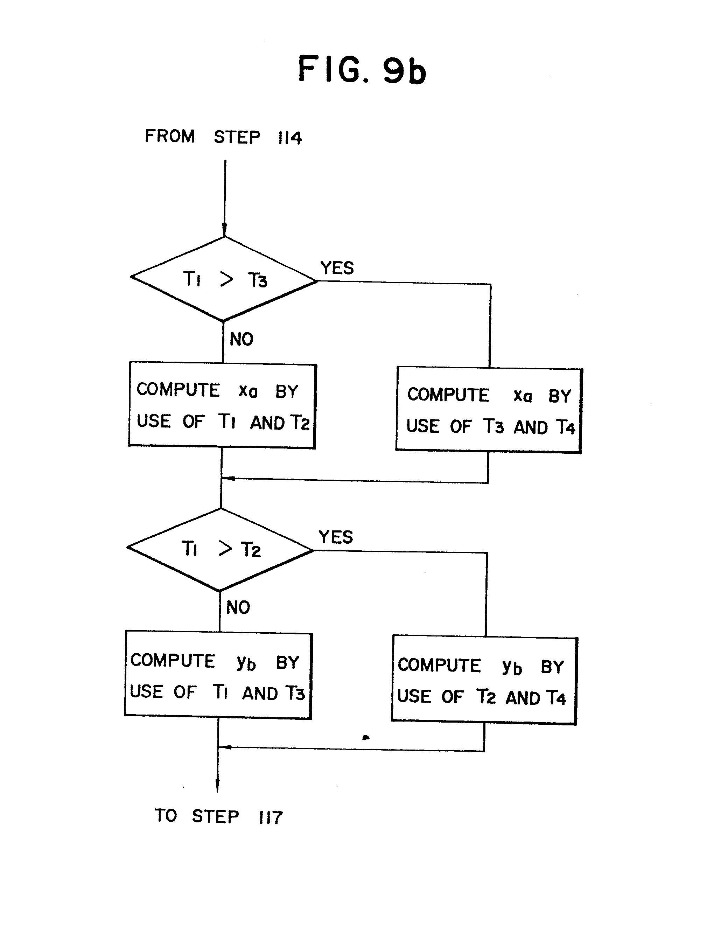

In Fig. 9a, steps 104, 108 and 115 are provided to select suitable ones out of the detector sections $S_1$ to $S_4$ (and hence propagation times $T_1$ to $T_4$). In the above-described example, $S_1$ to $S_3$ (or $T_1$ to $T_3$) are selected. With regard to the attenuation of the longitudinal elastic wave, it is optimum to select out of $S_1$ to $S_4$ one detector section having the shortest propagation distance therefrom to the input pen 3 and two detector sections adjacent thereto at step 115 and to determine the coordinates by use of the outputs of the detectors thus selected. The procedure of this method will now be described by referring to Fig. 9b. In addition to equations (29) and (30), equations

$$x_a = \frac{a}{2} + \frac{1}{2a} (\ell_3 + \ell_4) (\ell_3 - \ell_4) \qquad \ldots\ldots (39)$$

$$y_b = \frac{b}{2} + \frac{1}{2b} (\ell_2 + \ell_4) (\ell_2 - \ell_4) \qquad \ldots\ldots (40)$$

are considered. Unless relation $T_1 > T_3$ holds true with respect to $T_1$ to $T_4$ supplied from the counter circuit 7, the x coordinate is computed from equation (29) by using $T_1$ and $T_2$. If $T_1 > T_3$, on the other hand, the x coordinate is computed from equation (39) by using $T_3$ and $T_4$. Unless $T_1 > T_2$, the y coordinate is then computed from equation (30) by using $T_1$ and $T_3$. If $T_1 > T_2$, the y coordinate is computed from equation (40) by using $T_2$ and $T_4$. As already described, all of the angular deviations $\alpha_1$, $\beta_1$, $\alpha_2$ and $\beta_2$ can be computed by employing a plurality of combinations of detectors when pressing reference points $P_0$ and $Q_0$. If these values thus computed are stored at step 110, the coordinate can be determined at step 117 by means of suitable deviation data in the same way as equations (31) and (32).

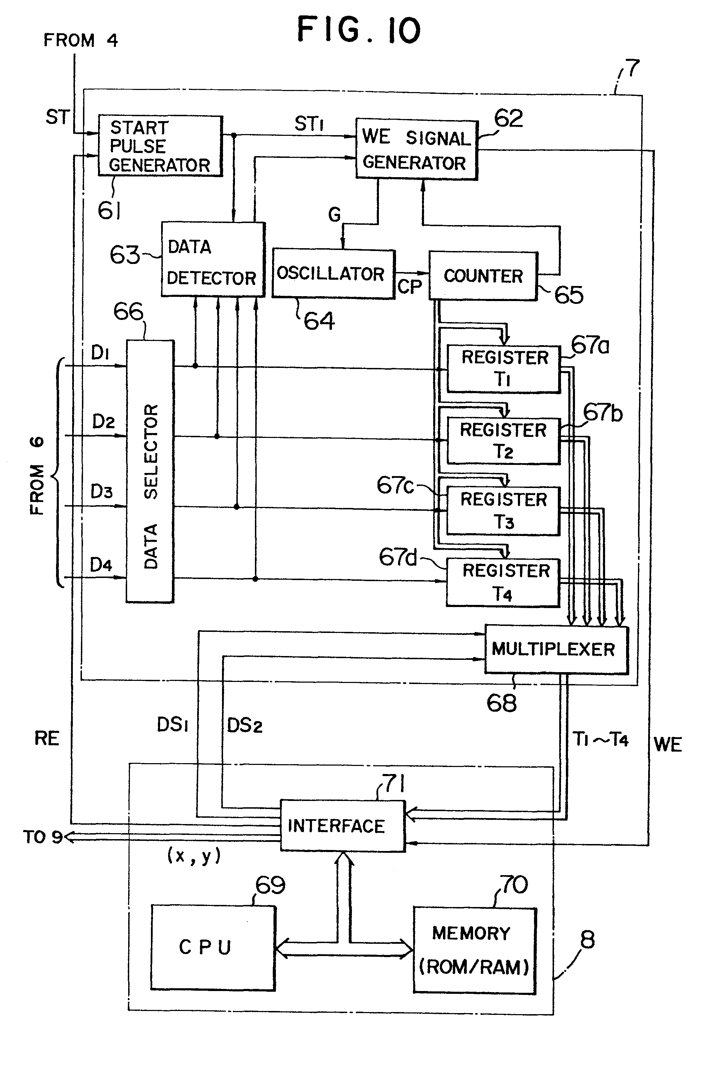

Fig. 10 shows preferred practical examples of the time counter circuit 7 and the coordinate computation circuit 8 included in the apparatus of Fig. 1.

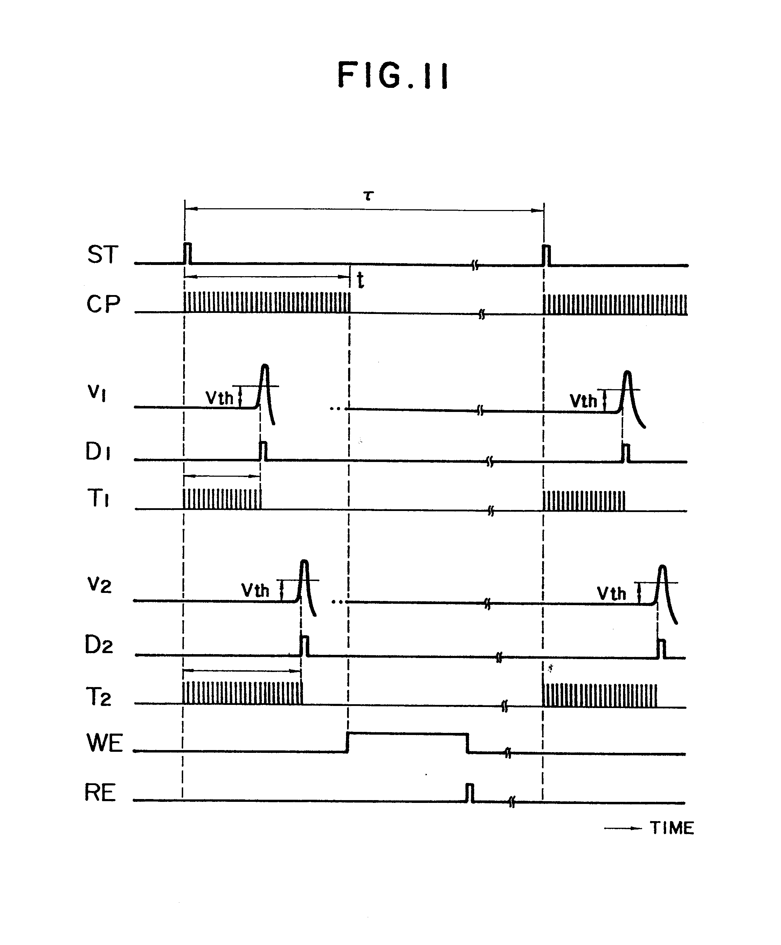

Fig. 11 is a time chart of various signals shown in Figs. 1 and 10.

Referring to Fig. 10, the counter circuit 7 includes a start pulse generator 61, a write enable (WE) signal generator 62, a data detector 63, an oscillator 64, a counter 65, a data selector 66, registers 67a to 67d, and a multiplexer 68. The microcomputer 8 includes a CPU 69, an interface (input/output signal processing circuit) 71, and a memory 70 including a RAM and a ROM in which a coordinate initialization program relating to steps 104, 105 and 108 to 111 shown in the flow chart of Fig. 9a, a coordinate determining program relating to steps 115 to 118 of Fig. 9a, and other programs necessary for controlling the CPU 69 are previously written. In accordance with the programs written in the ROM of the memory 70, the CPU 69 takes in necessary external data from the interface 71, transmits data to and receives data from the RAM of the memory 70, effects arithmetic operation, and sends the processed data to the interface 71 as occasion demands.

A start signal ST and a reset signal RE are applied to the start pulse generator 61 from the pulser 4 and from the interface 71 of the microcomputer 8 respectively. In response to the application of the start signal ST, a start pulse $ST_1$ is applied from the start pulse generator 61 to the WE signal generator 62 and data detector 63. On the other hand, the output signals $D_1$ to $D_4$ from the wave shaping circuit 6 are applied through the data selector 66 to be checked in the data detector 63, and, at the same time, applied as a count completion signal to the counter 65 which starts counting of basic clock pulses CP applied from the oscillator 64 in response to the application of the start pulse $ST_1$. The basic-clock counts $T_1$ to $T_4$ corresponding to the data signals $D_1$ to $D_4$ are registered in the $T_1$ to $T_4$ registers 67a to 67d respectively. In response to the application of data switch-over signals $DS_1$ and $DS_2$ from the interface 71 of the microcomputer 8, the data corresponding to the propagation delay times detected by the respective detectors 2a to 2d are applied through the multiplexer 68 to the microcomputer 8. The WE signal generator 62 would not generate the WE signal until all the data signals $D_1$ to $D_4$ are applied to the data detector 63. As seen in Fig. 11, the WE signal is generated with a delay time $t$ after the application of the start pulse $ST_1$ to the WE signal generator 62, and, in response to the application of the WE signal, the CPU 69 of the microcomputer 8 starts to compute the (x, y) coordinates of the input pen 3 on the basis of $T_1$ to $T_4$ corresponding to the data signals $D_1$ to $D_4$. Therefore, when any one of the data signals $D_1$ to $D_4$ is absent, the remaining three data are ignored as abnormal data and are not adopted for the computation of the coordinates. Such a situation tends to occur during, for example, the abrupt up and down movement of the input pen 3, and the above arrangement prevents mal-operation which may occur in such a case. When the coordinate initialization program written in the ROM of the memory 70 is executed, the coordinate deviation data computed by the CPU 69 are stored into the memory 70. When the coordinate determining program written in the ROM of the memory 70 is executed, the CPU 69 computes the coordinate of an arbitrary press point of the input pen on the tablet by use of the deviation data stored in the memory 70. Initial values indicated in step 100 of Fig. 9a are stored in the memory 70 in advance.

In the present embodiment, there is disclosed an apparatus using a liquid crystal display section of dot matrix type as the tablet display section. However, the present invention is not limited thereto. If a liquid crystal display unit of projection type or a CRT of projection type, for example, is used as another tablet display section, a large-sized display screen can be realized.

In the embodiment, detectors 2a to 2d are attached to side faces of corners of the tablet 1. However, the detectors may be attached onto the top surface near the corners. In this case, it is preferable to use the resonance frequency in the diameter direction of the piezoelectric element used as the detector.

The longitudinal elastic wave detection technique, the detector configuration, the installation of the detectors onto the tablet corners, the details of the time counter circuit, and the like are disclosed in U.S. Application Serial No. 758,468 filed on June 24, 1985 or European Patent Application No. 85109195 filed on June 23, 1985, which is assigned to the assignee of the present application and whose disclosure is incorporated herein by reference.

Owing to the present invention, it is possible to easily compensate various errors caused when the coordinate system of the transparent tablet is aligned with that of the tablet display section. For example, it is possible to compensate the deviations in the mounting positions of the elastic wave detectors mounted on the corners of the transparent tablet laminated on the top of the tablet display section, a working error of the transparent tablet, and an alignment error in fabrication caused when the transparent tablet is laminated on the tablet display section. As a result, the performance of the coordinate input apparatus can be significantly improved.

CLAIMS:

1.        A tablet type coordinate input apparatus using
elastic waves comprising:

display means including a display face (10)
having a first coordinate system;

a tablet (1) of a transparent material
laminated on said display face, said tablet being capable
of propagating an elastic wave therein;

detection means including a plurality of
elastic wave detectors (2a to 2d) respectively mounted
on predetermined positions of said tablet to detect
said elastic wave, a second coordinate system being
defined on the surface of said tablet by the mounting
positions of said detectors;

an elastic wave input member (3) having a
tip (32) capable of pressing any given point on the
surface of said tablet to emit an elastic wave therefrom; and

a coordinate computation circuit (8) for
taking out output signals ($v_1$ to $v_4$) from said detectors
in response to the emission of said elastic wave from
said input member as information for determination of
coordinates of the press point of said input member to
compute values of the coordinates therefrom, and for
supplying said coordinate values to said display means
as display information, said coordinate computation
circuit including means for computing data indicative
of deviation ($\alpha_1$, $\alpha_2$, $\beta_1$, $\beta_2$) of said first coordinate system with respect to said second coordinate system on the basis of output signals from said detectors in response to pressing of at least two reference points $(P_0, Q_0)$ on the surface of said tablet with said input member, storage means for storing said deviation data, and means for receiving output signals from said detectors in response to pressing of said any given point on the surface of said tablet with said input member together with said deviation data stored in said storage means, thereby to determine the coordinates of said any given point in a form with the deviation of said first coordinate system compensated with respect to said second coordinate system.

2. A tablet type coordinate input apparatus according to Claim 1, wherein said display face (10) of said display means has an arrangement of minute display dots, and said at least two reference points on the surface of said tablet (1) are located above at least two dots among said display dots having a known distance therebetween.

3. A tablet type coordinate input apparatus according to Claim 1, wherein said detectors (2a to 2d) detect a longitudinal elastic wave among elastic waves propagated in said tablet (1).

4. A tablet type coordinate input apparatus according to Claim 1, wherein said detectors (2a to 2b) are mounted on the respective side faces of the corners of said tablet (1).

5.      A tablet type coordinate input apparatus according to Claim 1, wherein said detectors are mounted on the surface portions of said tablet near the corners thereof.

6.      A coordinate input method in which by pressing with an elastic wave input member (3) an arbitrary position on the surface of an elastic wave propagation medium (1) of a transparent material laminated on a display face of a tablet-like display section (10) and having a plurality of elastic wave detectors (2a to 2d) mounted on side faces of corners thereof or on parts of the surface thereof, electric signals ($v_1$ to $v_4$) corresponding to an elastic wave emitted from said input member and detected by said detectors are taken out as information for determination of coordinates of said arbitrary position pressed with said input member, and values of the determined coordinates are supplied as display information to said display section, said method comprising the steps of:

establishing at least two reference points ($P_0$, $Q_0$) on the surface of said elastic wave propagation medium;

pressing said reference points with said input member to form a coordinate system having a first straight line passing through one of said reference points or a second straight line parallel to said first straight line as a reference axis; and

taking out said information for determination

0207527

of coordinates of said arbitrary position pressed with said input member with respect to said coordinate system.

7.     A coordinate input method according to Claim 6, wherein said information for determination of coordinates of said arbitrary position pressed with said input member is taken out in response to information representing known distances between said plurality of elastic wave detectors.

8.     A coordinate input method according to Claim 6, wherein said tablet display section (10) has an arrangement of minute display dots, and a coordinate system having a straight line coupling said arranged display dots or a straight line parallel to said straight line as a reference axis is formed to take out said information for determination of coordinates of said arbitrary position pressed with said input member (30).

9.     A coordinate input method according to Claim 8, wherein points on the surface of said elastic wave propagation medium (1) corresponding to at least two reference dots among said display dots having a known distance therebetween are pressed as said at least two reference points with said input member (3), whereby a coordinate system having a straight line passing through one of said reference dots or a straight line parallel to said straight line as a reference axis is formed to take out said information for determination of coordinates of said arbitrary position pressed with

said input member.

# FIG. 1

# FIG. 2

(a) LONGITUDINAL WAVE
(b) WAVE WITH SUPERIMPOSED PLATE WAVE
(c) WAVE WITH SUPERIMPOSED TRANSVERSE WAVE

# FIG. 3

# FIG. 4

# FIG. 5

# FIG. 6

# FIG. 7

# FIG. 8

# FIG. 9a

START — 100

SET INITIAL VALUES (a, b, c, d, vp, ETC.) — 101

INITIALIZE INTERFACE AND DISPLAY SCREEN

1

PRESS REFERENCE POINT Po — 102

INPUT T1 ～ T4 — 103

SELECT THREE OF S1 ～ S4 — 104

COMPUTE $(x_{a1}, y_{a1})$, $(x_{b1}, y_{b1})$, ETC. — 105

PRESS REFERENCE POINT Qo — 106

2

---

2

INPUT T1 ～ T4 — 107

SELECT THREE OF S1 ～ S4 — 108

COMPUTE $(x_{a2}, y_{a2})$, $(x_{b2}, y_{b2})$, ETC. — 109

COMPUTE DEVIATION DATA $(\cos\alpha_1, \sin\alpha_1, \cos\beta_1, \sin\beta_1$, ETC.) — 110

DETERMINE COORDINATE OF POINT $Po'(x_0, y_0)$ — 111

Po ≃ Po' — 112 → NO → 1

YES

3

PRESS ANY POINT P(x, y) — 113

INPUT T1 ～ T4 — 114

SELECT THREE OF S1 ～ S4 — 115

4

---

4

COMPUTE $(x_a, y_b)$, ETC. — 116

DETERMINE COORDINATE (x, y) OF POINT P — 117

DISPLAY POINT P — 118

3

0207527

# FIG. 9b

FROM STEP 114

$T_1 > T_3$

YES

NO

COMPUTE $x_a$ BY USE OF $T_1$ AND $T_2$

COMPUTE $x_a$ BY USE OF $T_3$ AND $T_4$

$T_1 > T_2$

YES

NO

COMPUTE $y_b$ BY USE OF $T_1$ AND $T_3$

COMPUTE $y_b$ BY USE OF $T_2$ AND $T_4$

TO STEP 117

FIG. 10

7/8

0207527

# FIG.11